# EUROPEAN PATENT APPLICATION

(11) **EP 1 895 406 A1**
(43) Date of publication of application: **05.03.2008**
(21) Application number: 06291366.0
(22) Date of filing: 25.08.2006
(51) Int. Cl.: G06F 9/44

(54) **Method of removing an instance of a stateful session bean**

(71) Applicant: Alcatel Lucent, 75008 Paris (FR)
(72) Inventor: Janssens, Nico, 9290 Overmere (BE); Van Vlerken, Bert, 9230 Brasschaat (BE)
(74) Representative: Zinsinger, Norbert

(57) **Abstract**

The invention concerns a method of removing an instance of a stateful session bean from a passive state (32), and a computer program product to execute this method. An event initiates the removal of said instance of the SFSB from the passive state (32) to a does-not-exist state (30). Upon that event, a function of a container managing the SFSB is triggered. Said function handles the release of external state objects associated with the instance of the SFSB upon removing the instance of the SFSB. In one preferred embodiment of the method introducing a new type of callback method, said instance of the SFSB is partially reactivated, after calling said new type of callback method on said instance of the SFSB, by setting said instance of the SFSB in a near remove state (33) between the passive state (32) and the does-not-exist state (30).

## Description

The present invention relates to a method of removing an instance of a stateful session bean from a passive state, and a computer program product to execute said method.

In current days, a lot of B2B (Business to Business) or B2C (Business to Customer) services are being offered by applications running within a J2EE application server (J2EE = Java 2 Platform Enterprise Edition). Quite often, the applications are maintaining state on behalf of the clients.

A J2EE server is typically running multi-tier model, i.e., the server exists out of two tiers: the web tier, responsible for providing client interfaces, and the EJB (= Enterprise Java Beans) tier, containing the logic and business code. Within the EJB different components can exist: Message Driven Beans (MDBs), Stateful Session Beans (= SFSBs), Stateless Session Beans (= SLSBs) and Entity Beans.

Several applications bind the state information to the client session, by making the web tier responsible for maintaining the client's state information. In other cases, the EJB tier could be made responsible for the state info. In that case, it is quite natural to use a SFSB (= Stateful Session Bean). However, there are some consequences related to this approach. Namely, all this information consumes some resources. On the other hand the sessions could be long lived, meaning that the session is to be kept for quite a long time, allocating the resources for a long time. Which would require the session to be persisted onto disk storage. Additionally, the beans should be sufficiently responsive to client requests. Which would require the bean state to be kept in memory.

There is clearly a conflict here. Most J2EE applications keep the most recently used sessions in memory, while less active sessions are being persisted onto disk storage, i.e., are set into a "passive" state. To avoid some disk storage starvation, the "stored" session information is being timed out, if the client waits too long to use the session state.

In some cases it is impossible to maintain all related state information for a single session into a single SFSB. Some information needs to be kept in external resource containers, for the whole duration of the session bean.

While in the normal case, the complete state (both internal to the SFSB, as well the external state info) can be destroyed properly by the available call back functions. If a client wants to create a bean, the client calls a createXXX() method on the SFSB, resulting in a bean to be created maintaining the state as indicated by the client. If the client wants to stop the session, he needs to call the remove method, which will result in the ejbRemove (for EJB 2.x) or PreDestroy (for EJB 3.0) callback functions to be called. Hence, the bean instance is being informed about a nearby removal.

According to the prior art, if a SFSB instance is in the passive state and needs to be moved to the does-not-exist state, the SFSB instance goes to the does-not-exist state without being re-activated. For example, if the SFSB instance is in the passive state and needs to be removed, the SFSB instance directly goes to the does-not-exist state. However, external state objects associated with a SFSB instance may still remain undeleted and claim resources when the SFSB instance in the passive state is directly removed.

It is the object of the present invention to provide an enhanced usage of SFSBs.

The object of the present invention is achieved by a method of removing an instance of a stateful session bean from a passive state, whereby the method comprises the steps of initiating, by an event, the removal of said instance of the SFSB from the passive state to a does-not-exist state and triggering, upon that event, a function of a container managing the SFSB wherein said function handles the release of external state objects associated with the instance of the SFSB upon removing the instance of the SFSB. Further, the object of the present invention is achieved by a computer program product adapted to perform said method when executed on a computer.

Said computer program product may be a set of corresponding computer instructions, i.e., computer software written in any computer language and executable by a computer. Also, said computer program product may be a storage medium comprising said computer instructions. Likewise, said computer program product may be represented by a computer with said corresponding computer instructions and adapted to execute said computer instructions. Preferably, the container has an additional code providing the function which handles the new strategy in removing the SFSB instance from the passive state.

The container comprises said function, e.g., in form of a software element, which is responsible for triggering and/or executing the additional functions according to the present invention. Said function may comprise one or more meta-functions which support the steps described in the following.

If an instance of a SFSB is passivated, i.e., moved from the active state to the passive state, data associated with said passivated SFSB instance may be stored on a disk, claiming disk resources. If the container decides to remove the passivated state, these resources may not be removed and still claim system resources although the associated SFSB instance does not exist any more. The present invention avoids the unnecessary blocking of these external resources and provides the release of these resources. This is made possible by means of the function of the container executing the method according to the present invention.

An advantage of the invention is that it provides a callback method to be called to indicate the nearby removal or end of the state if the bean is in the passive state and the container decides to completely remove the bean instance. Consequently, if there is external state associated to this SFSB, this state can be notified of the invalidity.

Thus, the invention eliminates a problem continuously encountered with the prior art SFSBs in the passive state: due to the fact that a stored state, that is no longer used (timed out), can be destroyed as is, because it is invalid anyhow and all resources should have been released by the call back to the ejbPassivate (EJB2.x) or PrePassivate (EJB3.0) functions, an external state still associated to this passivated SFSB is not notified of the invalidity. Although this prior art behaviour was appropriate for a lot of applications, in other applications this meant a burden to overcome.

Another advantage of the invention is a better and broader usage of SFSBs. The bean provider needs not care about how to link/correlate a distributed state management as it becomes available on the J2EE platform in a natural way. Furthermore, the present invention allows a much easier application development.

Further advantages are achieved by the embodiments of the invention indicated by the dependent claims.

According to a preferred embodiment of the invention, the SFSB instance is reactivated from the passive state to an active state before it is put into the does-not-exist state. When the SFSB instance has been reactivated to the active state, e.g., the method ready state, the SFSB instance reclaims resources, e.g., memory space. It is possible that the SFSB instance reclaims external states and conversational states associated with the SFSB instance and that have been kept in a storage since the SFSB instance was passivated. The function of the container managing the SFSB initiates a callback method that releases those external state objects associated with the instance of the SFSB when the SFSB instance is moved to the does-not-exist state. Finally, the instance of the SFSB is removed from the active state to the does-not-exist state, preferably through a remove method known from prior art.

According to another preferred embodiment of the invention, the method of reactivating a SFSB instance before removing the instance of the SFSB, i.e., before moving the SFSB instance to the does-not-exist state, is only applied to instances of those SFSBs which have a corresponding indicator associated with them. The indicator indicates to the function of the container whether the respective instance of the SFSB needs to be reactivated from the passive state to an active state for the release of the external state objects associated with the instance of the SFSB upon removing the instance of the SFSB. Preferably, said indicator is a flag in a deployment descriptor of the SFSB.

According to this preferred embodiment of the invention, there is first an examination, executed by the function of the container, whether the instance of the SFSB to be removed has an indicator associated with it. If said instance of the SFSB has an indicator associated with it, the instance of the SFSB is reactivated from the passive state to the active state, re-establishing the relation with the external state objects associated with the instance of the SFSB. After that, the instance of the SFSB is removed from the active state to the does-not-exist state, preferably through a remove method known from prior art, in which the external state objects associated with the instance of the SFSB are released. On the other hand, if said instance of the SFSB has no such indicator associated with it, the instance of the SFSB is directly removed from the passive state to the does-not-exist state as known from the prior art.

According to another preferred embodiment of the invention, the SFSB instance is removed from the passive state by means of a new type of callback method. Implementing this new type of callback method requires that a SFSB supports this callback method. This callback method is adapted to release the external state objects associated with the instance of the SFSB upon removing the instance of the SFSB. Upon a triggering event, a function of the container managing the SFSB removes the instance of the SFSB from the passive state by means of calling said new type of callback method. The calling of the new callback method is preferably executed by the function of the container.

Preferably, if the new type of callback method has to be considered, there is first an examination whether said instance of the SFSB has provided said new type of callback method. This examination may be executed by the function of the container. Depending on the result of this examination, two alternative ways will be taken. If the instance of the SFSB has provided said new type of callback method, the container managing the instance of the SFSB calls said new type of callback method on said instance of the SFSB. As mentioned above, the calling of the new callback method is preferably executed by the function of the container. Alternatively, if the instance of the SFSB has not provided said new type of callback method, the container removes the instance of the SFSB from the passive state as known from the prior art or according to any of the other methods described above.

Preferably, the function of the container does an analysis of meta-data associated with a SFSB. The analysis results in information whether the SFSB supports said new type of callback method. So the container has an easy way of checking whether to apply the new type of callback method to the SFSB.

According to another preferred embodiment of the invention, the new type of callback method, when called on a SFSB instance, triggers a partial reactivation of said instance of the SFSB. This partial reactivation may be represented by a new state (called near remove state) between the passive state and the does-not-exist state where the SFSB instance is moved after leaving the passive state. From said near remove state, the SFSB instance is moved to the does-not-exist state whereby the removal is executed by said callback function, preferably under control of the function of the container.

Preferably, said new type of callback method allows to clean up external state objects associated with the SFSB instance. To this end, the calling of the new type of callback method initiates the provision of information about external state objects which are associated with the SFSB instance to be removed. The external state objects may occupy resources, e.g., system resources like bandwidth, processor or memory resources. The delivered information is utilized to delete the external state objects which are not needed any more and to release the associated resources.

These as well as further features and advantages of the invention will be better appreciated by reading the following detailed description of presently preferred exemplary embodiments taken in conjunction with accompanying drawings of which:
- Fig. 1: is a block diagram showing a detail of the lifecycle of a SFSB according to an embodiment of the invention.
- Fig. 2: is a block diagram showing a detail of the lifecycle of a SFSB according to another embodiment of the invention.
- Fig. 3: is a block diagram showing a detail of the lifecycle of a SFSB according to still another embodiment of the invention.

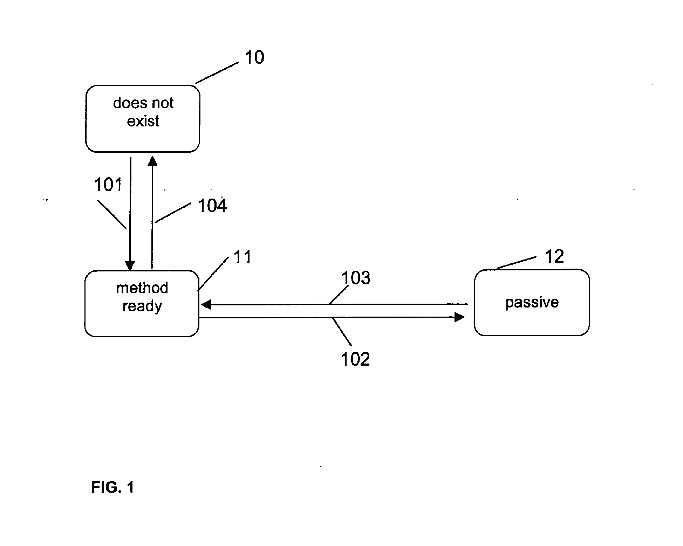

Fig. 1 shows the three main stages in the life cycle of a SFSB, the does-not-exist state 10, the method ready state 11, and the passive state 12. In the does-not-exist state 10, the SFSB does not have an instance in the memory. In this state 10, the SFSB has not been instantiated.

When a client obtains a reference to a SFSB instance through dependency injection or JNDI lookup, or when the client invokes a create<Method> method on the SFSB's home interface, a SFSB instance's life starts (JNDI = Java Naming and Directory Interface). This causes the container to invoke newlnstance on the SFSB class to create a new SFSB instance. After a couple of further steps 101 by the container known in the prior art, the instance of the SFSB is in the method ready state 11.

In the method ready state 11, the SFSB has an instance in the memory of the EJB container and it is ready to serve the client. One instance of the Stateful Session Bean serves only one client. From the method ready state 11, the instance of the SFSB can be moved 104 into the does-not-exist state 10 by a remove method or a timeout. For example, a remove method is executed when the container calls the ejbRemove or PreDestroy callback.

If the container's caching algorithm decides that the SFSB instance should be evicted from memory, the container issues ejbPassivate on the SFSB instance and the SFSB instance is passivated by moving 102 the SFSB instance from the method ready state 11 to the passive state 12.

In the passive state 12 the SFSB instance is passivated to conserve the resource. The passivate method is called before the SFSB instance enters the "passive" state. The SFSB instance should release any resources that it can reacquire later in the ejbActivate() method. After the passivate method completes, the SFSB instance must be in a state that allows the container to use the Java Serialization protocol to externalize and store away the SFSB instance's state. The ejbRemove callback method or a timeout moves the bean into the Does Not Exist stage.

According to a first embodiment of the invention described in Fig. 1, the function of the container is enforced to always call the ejbRemove or PreDestroy method when the container decides to remove the SFSB instance from the passive state 12 to the does-not-exist state 10. Preferably, the function of the container first brings 103 the SFSB instance from the passive state 12 to the method ready state 11, by calling an ejbActivate method. By activating the SFSB instance again, the SFSB will/could reclaim (external) resources, which will be freed again almost immediately, because the bean will be "removed". Calling, by the container, the ejbRemove or PreDestroy method on the SFSB instance in the method ready state 11 causes the SFSB instance to be moved 104 from the method ready state 11 to the does-not-exist state 10.

By virtue of the fact that the SFSB instance is not removed from the passive state 12 in a direct way but via the method ready state 11, the instance of the SFSB can be informed about its nearby removal. Likewise, the conversational state associated with the SFSB can be notified about the imminent invalidity of the SFSB. Thus, there is a possibility for the clean-up of external states associated with the SFSB instance before the SFSB instance does not exist any more.

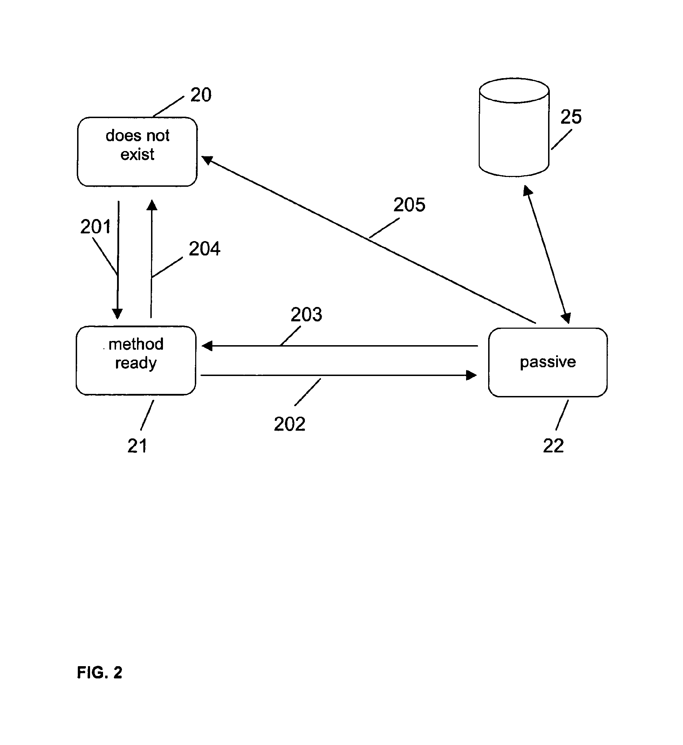

Fig. 2 is related to another embodiment of the invention. Fig. 2 shows - in analogy to the situation of Fig. 1 - again the three main stages in the life cycle of a SFSB, the does-not-exist state 20, the method ready state 21, and the passive state 22.

At the generation step 201 of a SFSB instance, it is checked and defined, respectively, whether the SFSB instance needs the behaviour as given above in the embodiment of the invention related to Fig. 1. That means that for each SFSB instance that is created, an indicator is set which indicates if the created SFSB instance, while in the passive state 22, must be activated before being removed or not. In Fig. 2, a storage device 25 is shown where said indicator may be stored. This storage device 25 may be memory space in a meta-data field associated with a SFSB. Preferably, said storage device 25 is a deployment descriptor of the SFSB and said indicator is a flag in said deployment descriptor of the SFSB.

Then, the SFSB instance may be passivated and moved 202 from the method ready state 21 to the passive state 22, as described above with reference to Fig. 1.

When the container decides to remove the passivated SFSB instance from the passive state 22, this may proceed in either of two alternative ways.

The first alternative is that, as is shown in Fig. 2, the SFSB instance for which said flag is set is first activated 203 from the passive state 22 to the method ready state 21. By activating the SFSB instance again, the SFSB instance will/could reclaim (external) resources, which will be freed again almost immediately, because the SFSB instance will be "removed". While the SFSB instance is in the method ready state 21, the container calls on the SFSB instance the ejbRemove or PreDestroy method, which causes the SFSB instance to be moved 204 from the method ready state 21 to the does-not-exist state 20.

By virtue of the fact that a SFSB instance is not necessarily removed from the passive state 22 in a direct way but that it may be removed via the method ready state 21, the instance of the SFSB can be informed about its nearby removal. Likewise, the conversational state associated with the SFSB can be notified about the imminent invalidity of the SFSB. Thus, there is a possibility - for selectively defined SFSBs which may need this possibility - for the clean-up of external states associated with the SFSB instance before the SFSB instance does not exist any more.

However, not every SFSB may need this re-activation to the method ready state 11 or 21 before being moved into the does-not-exist state 10 or 20. For these SFSB instances, the second alternative is advantageous. The second alternative is that the SFSB instance for which said flag is not set is directly removed 205 from the passive state 22 to the does-not-exist state 20.

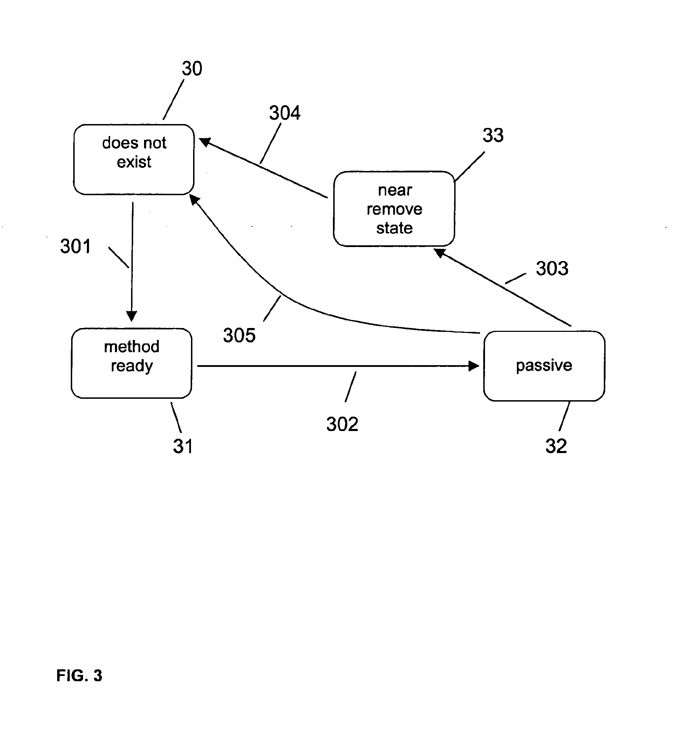

Fig. 3 is related to still another embodiment of the invention. Fig. 3 shows - in analogy to the situation of Fig. 1 and Fig. 2 - again the three main stages in the life cycle of a SFSB, the does-not-exist state 30, the method ready state 31, and the passive state 32.

The basic idea of this embodiment is to modify the SFSB lifecycle, as presented in Fig. 3, for SFSBs still having an external state associated thereto, in the sense that it makes it possible a callback function to be called by the container even if the SFSB is in the passive state 32 and needs to be removed from disk storage.

Basically, the embodiment according to Fig. 3 introduces a call back function that may be called when the container needs to remove the SFSB. Only the container knows and decides when to remove a SFSB from passive state 32. The present embodiment of the invention provides a new type of callback method. If the SFSB has provided this method, the container calls this method upon removing a bean from the passive state 32.

This name of this new type of callback function may be, e.g., ejbRemoveFromPassive or PreDestroyFromPassive.

Let us assume that a SFSB instance has been generated 301 and, after the generation 301 of its method ready state 31, moved 302 from the method ready state 31 into the passive state 32. If the container decides that the SFSB instance should be removed from the passive state 32, the function of the container checks whether the SFSB instance has provided the new callback method. Each SFSB may have meta-data associated with it from which the information can be retrieved whether the SFSB supports the new callback method.

If so, the function of the container calls the new callback method on the SFSB instance. The SFSB instance, called upon by this new callback method, is put 303 into a new state 33 where it does not re-claim resources, though.

Preferably, the new state 33 may represent a state where the SFSB instance and the external resources associated with the SFSB instance are semi-activated. From this new state 33, the SFSB instance is then removed, i.e., moved 304 into the does-not-exist state 30. The bean provider can implement this callback method in such a way to avoid unnecessary external resource reservations, yet it is possible to indicate to external states to clean up their states as well. Thus, resources associated with the SFSB instance to be removed and not needed any more can be released in due time.

By calling the new type of callback method, the instance of the SFSB is informed about its nearby removal. Likewise, the conversational state associated with the SFSB can be notified about the imminent invalidity of the SFSB, although the SFSB instance has not been re-activated in the traditional manner, i.e., by moving the SFSB instance to the method ready state.

However, if the examination of the meta-data of the SFSB show that the SFSB does not support the new callback method, the SFSB instance is removed from the passive state in a process 305 without the near remove state 33, e.g., in a remove method 305 known from prior art. If the new callback method is not supported also any of the other remove methods described above may be used to remove the SFSB instance from the passive state 32.

## Claims

1. A method of removing an instance of a stateful session bean from a passive state (12, 22, 32), whereby the method comprises the steps of: initiating, by an event, the removal of said instance of the SFSB from the passive state (12, 22, 32) to a does-not-exist state (10, 20, 30); and triggering upon that event a function of a container managing the SFSB wherein said function handles the release of external state objects associated with the instance of the SFSB upon removing the instance of the SFSB.

2. The method of claim 1, wherein the method comprises the steps of:
reactivating, by said function, said instance of the SFSB from the passive state (12, 22, 32) to an active state (11, 21, 31);
reclaiming, by the instance of the SFSB upon reactivation, resources; calling, by said container, a callback method that releases external state objects associated with the instance of the SFSB; and
removing the instance of the SFSB from the active state (11, 21, 31) to the does-not-exist state (10, 20, 30).

3. The method of claim 1, wherein the method comprises the steps of:
storing an indicator that selectively indicates whether a respective instance of the SFSB needs to be reactivated from the passive state (12, 22, 32) to an active state (11, 21, 31) for the release of the external state objects associated with the instance of the SFSB upon removing the instance of the SFSB;
checking, by said function, whether the instance of the SFSB to be removed carries said indicator;
if said instance of the SFSB carries said indicator, reactivating the instance of the SFSB from the passive state (12, 22, 32) to the active state (11, 21, 31) and releasing the external state objects associated with the instance of the SFSB; and
if said instance of the SFSB does not carry said indicator, directly removing the instance of the SFSB from the passive state (12, 22, 32) to the does-not-exist state (10, 20, 30).

4. The method of claim 3, wherein said indicator is a flag in a deployment descriptor of the SFSB.

5. The method of claim 1, wherein the method comprises the steps of:
providing a new type of callback method within the SFSB, said new type of callback method releasing the external state objects associated with the instance of the SFSB upon removing the instance of the SFSB; and
removing by the container the instance of the SFSB from the passive state (12, 22, 32) by means of calling, by said function of the container, said new type of callback method.

6. The method of claim 5, wherein the method comprises the steps of:
checking, by said function of the container, whether said instance of the SFSB has provided said new type of callback method;
if the instance of the SFSB has provided said new type of callback method, calling said new type of callback method on said instance of the SFSB; and
if the instance of the SFSB has not provided said new type of callback method, removing the instance of the SFSB from the passive state (12, 22, 32).

7. The method of claim 5, wherein said function recognizes from meta-data associated with the SFSB whether the SFSB supports said new type of callback method.

8. The method of claim 5, wherein the method comprises the step of:
partially reactivating, after calling said new type of callback method on said instance of the SFSB, said instance of the SFSB by setting said instance of the SFSB in a near remove state (33) between the passive state (32) and the does-not-exist state (30).

9. The method of claim 5, wherein the method comprises the step of:
indicating, by calling said new type of callback method, external state information for clean-up of the external state objects.

10. A computer program product adapted to perform the method of claim 1 when executed on a computer.

## Amended claims

### Amended claims in accordance with Rule 137(2) EPC.

**1.** A method of removing an instance of a stateful session bean (SFSB) from a passive state (12, 22, 32), whereby the method comprises the step of:
initiating, by an event, the removal of said instance of the SFSB from the passive state (12, 22, 32) to a does-not-exist state (10, 20, 30),
**characterised in**
**that** the method further comprises the step of:
triggering upon that event a function of a container managing the SFSB wherein said function handles the release of external state objects associated with the instance of the SFSB upon removing the instance of the SFSB.

**2.** The method of claim 1, wherein the method comprises the steps of:
reactivating, by said function, said instance of the SFSB from the passive state (12, 22, 32) to an active state (11, 21, 31);
reclaiming, by the instance of the SFSB upon reactivation, resources; calling, by said container, a callback method that releases external state objects associated with the instance of the SFSB; and
removing the instance of the SFSB from the active state (11, 21, 31) to the does-not-exist state (10, 20, 30).

**3.** The method of claim 1, wherein the method comprises the steps of:
storing an indicator that selectively indicates whether a respective instance of the SFSB needs to be reactivated from the passive state (12, 22, 32) to an active state (11, 21, 31) for the release of the external state objects associated with the instance of the SFSB upon removing the instance of the SFSB;
checking, by said function, whether the instance of the SFSB to be removed carries said indicator;
if said instance of the SFSB carries said indicator, reactivating the instance of the SFSB from the passive state (12, 22, 32) to the active state (11, 21, 31) and releasing the external state objects associated with the instance of the SFSB; and
if said instance of the SFSB does not carry said indicator, directly removing the instance of the SFSB from the passive state (12, 22, 32) to the does-not-exist state (10, 20, 30).

**4.** The method of claim 3, wherein said indicator is a flag in a deployment descriptor of the SFSB.

**5.** The method of claim 1, wherein the method comprises the steps of:
providing a type of callback method within the SFSB, said type of callback method releasing the external state objects associated with the instance of the SFSB upon removing the instance of the SFSB; and
removing by the container the instance of the SFSB from the passive state (12, 22, 32) by means of calling, by said function of the container, said type of callback method.

**6.** The method of claim 5, wherein the method comprises the steps of:
checking, by said function of the container, whether said instance of the SFSB has provided said type of callback method;
if the instance of the SFSB has provided said type of callback method, calling said type of callback method on said instance of the SFSB; and
if the instance of the SFSB has not provided said type of callback method, removing the instance of the SFSB from the passive state (12, 22, 32).

**7.** The method of claim 5, wherein said function recognizes from meta-data associated with the SFSB whether the SFSB supports said type of callback method.

**8.** The method of claim 5, wherein the method comprises the step of:
partially reactivating, after calling said type of callback method on said instance of the SFSB, said instance of the SFSB by setting said instance of the SFSB in a state called near remove state (33) between the passive state (32) and the does-not-exist state (30) where the SFSB instance does not re-claim resources and the release of the external state objects associated with the instance of the SFSB is possible.

**9.** The method of claim 5, wherein the method comprises the step of:
indicating, by calling said type of callback method, information about the external state objects to be utilized for a clean-up of the external state objects.

**10.** A computer program product adapted to perform the method of claim 1 when executed on a computer.
